# EUROPEAN PATENT SPECIFICATION

(11) **EP 1 005 511 B1**
(45) Date of publication and mention of the grant of the patent: **16.10.2002**
(21) Application number: 98946443.3
(22) Date of filing: 21.08.1998
(51) Int. Cl.: C08L 95/00, E01C 7/18, E01C 7/26

(54) **SURFACING METHOD**
BESCHICHTUNGSVERFAHREN
PROCEDE DE REVETEMENT DE ROUTES

(30) Priority: 22.08.1997 GB 9717942
(43) Date of publication of application: 07.06.2000
(73) Proprietor: COLAS, 92653 Boulogne-Billancourt Cédex (FR)
(72) Inventor: KILNER, David Nicholas, West Sussex RH13 8PD (GB)
(74) Representative: Michelet, Alain
(86) International application number: EP9805485
(87) International publication number: WO99010434

(56) References cited:
- EP-A- 0 344 382
- EP-A- 0 655 484
- BE-A- 344 549
- FR-A- 1 455 072
- GB-A- 1 124 498

## Description

### Field of the Invention

The present invention relates to a novel method of road surfacing which is capable of achieving improved sustainable texture depth.

### Background to the Invention

Cold road surfacing materials mixed at the point of application, either by a batching process or by using a continuous flow mixing and laying machine, have traditionally been known as slurries, and latterly as micro-asphalts. These materials have been made by mixing a bitumen emulsion system together with an aggregate of known grading, filler, cement and additional water, and then applied to road surfaces as slurries, by spreading or screeding.

The dense nature of such materials, and the use of aggregate gradings which do not contain high populations of large, or coarse, aggregates, has resulted in systems where sustainable texture depth is less than 1 mm, and in most cases less than 0.5 mm. While these low texture surfaces are acceptable on low speed urban roads, for roads subject to vehicle speeds above 40 mph (60 kph) the UK Highway Authorities prefer a sustainable texture depth in excess of 1.5 mm. This requirement has recently been reduced to 1.3 mm. In the context of this Application texture depth is measured in mm by a sand-patch test method according to BS 598, Part 105. Further, by sustainable texture depth, we mean that the initial texture depth should typically by sustained for at least 1 year of use, and preferably for considerably longer than this.

In addition to texture depth, a further consideration when selecting a road surfacing material is that road surface texture can either be positive or negative. Negative texture comprises a flat, smooth road surface broken with a series of holes or fissures, whereas positive texture is generated by a series of peaks. Positive texture is achieved when aggregate promontories are proud in a surface. This allows the aggregate points to be gripped by tyre treads, thereby improving type/road adhesion. Surface dressing and hot rolled asphalt are examples of this.

Negative texture is achieved when aggregate in the road surface lies flat side by side, i.e. no promontories and air pockets (voids) lie between the flattened aggregates. These air pockets or cells, are usually inter-connected and act as escape passages for rain water (drainage, anti-spray); also are sound absorbent cells, reducing traffic noise. The most familiar example is porous asphalt (friction course, pervious macadam).

A disadvantage with a negative textured surface is that it can become clogged with debris, which renders the surface very smooth and thus susceptible to aquaplaning and the like, which may cause accidents. Irrespective of this, negative textured "thin" (i.e. below 20 mm thick), hot surfacings tends to be popular in the UK, partly due to the fact that it can be applied by conventional hot surfacing application equipment and techniques.

Currently, the only practised cold surfacing system which can provide a positive textured surface which meets the high speed (above 40 mph) road requirement is termed "Surface Dressing". This system is applied by spraying the road with a warm or cold binder, and then covering this with a layer or layers of chippings which are bonded to the existing road surface by the binder. Although Surface Dressing is relatively cheap, it has the following disadvantages:
1. It will not re-profile a deformed road.
2. It suffers from chipping loss.
3. It requires "after care".
4. It has a poor public image.
5. It can "fat" up in hot weather due to the excess bitumen available.

Examples of other known cold surfacing systems include those disclosed in BE-A-903034, FR-A-1455072, EP-A-0655484, EP-A-0344382, and the well-known Ralumac-type systems.

BE-A-903034 describes various aggregate gradings formed from a maximum of 80% crushed sand of particle size 0-3 mm together with either 20% or more of crushed material greater than or equal to 2-5 mm, or 0-3 mm crushed sand together with crushed material of a size 7-15 mm with 30% of the mixture being of a grain size greater than 0-3 mm. The selected aggregate grading is then mixed with a bitumen emulsion with a solids content of about 60% by weight, in an amount of 14% to 20% by weight of the dry weight of aggregate. The resulting material is typically laid as a number of layers, although a single layer application may be suitable for temporary road surfaces.

FR-A-1455072 describes a cold emulsion mixture intended particularly for the covering of roads and other construction areas which have to be very durable. The mixture contains from 60-80% of a crushed material which passes through a screen whose apertures have a diameter of between 25 and 40 mm and which are rejected by a screen whose apertures have a diameter of between 3 and 8 mm; from 20-40% of alluvial sand which passes through a screen whose apertures have a diameter of 6 mm; from 4-7% by weight of crushed material in an acidic bituminous emulsion; and 0.5N to 0.2N alkaline solution, to cause breakage of the emulsion.

EP-A-0655484 describes a cold emulsion system comprising a bituminous emulsion and relatively coarse and relatively fine aggregates that are present in relative amounts such that gaps exist between the particles of the aggregates. This known system contains a gap-graded aggregate mixture of typically less than 10 mm in size and, optionally, a fibrous thickening agent, to improve the binder film thickness and dynamic viscosity.

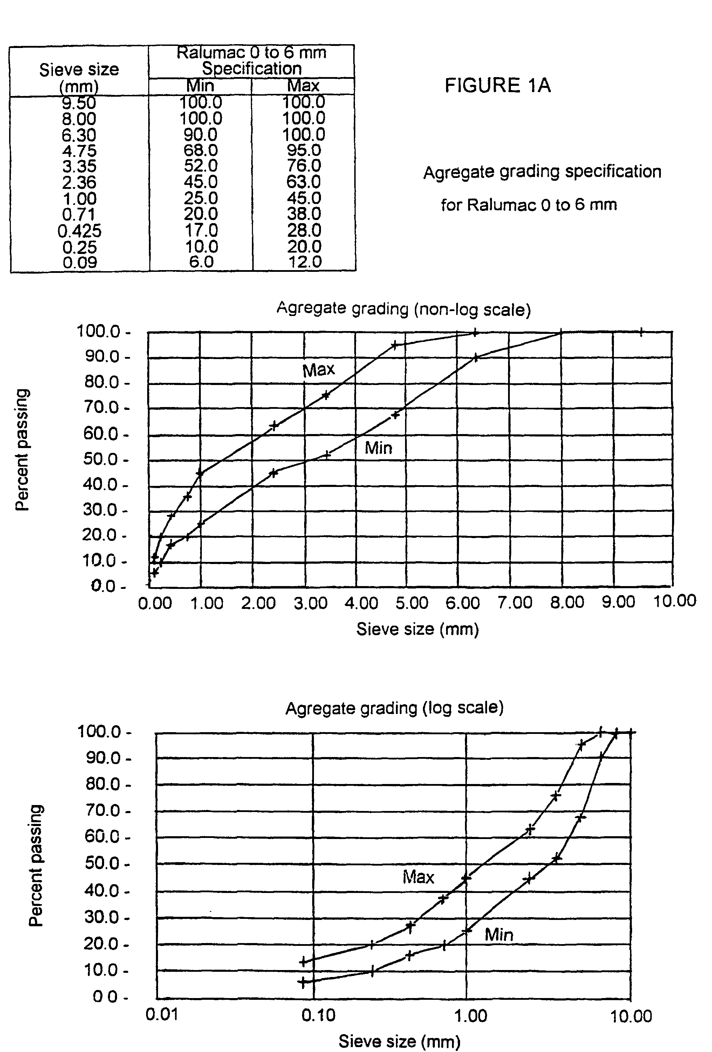

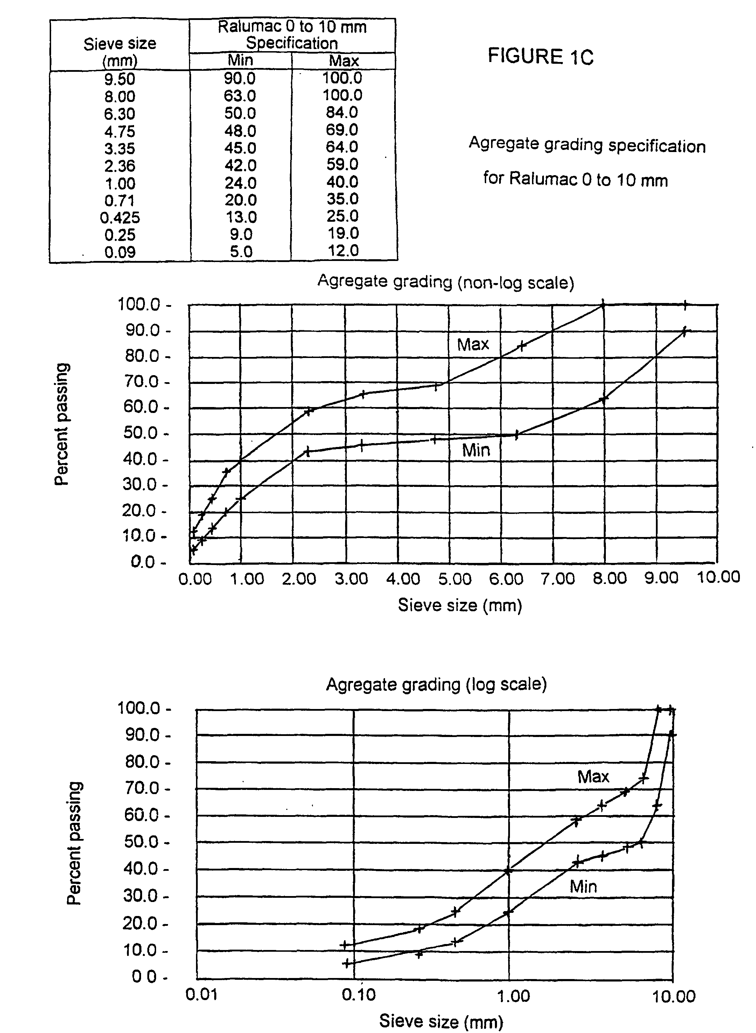

The Ralumac micro-asphalt process is representative of many systems currently being applied throughout the world, and has particle size profiles shown in Figures 1A to C. The bitumen emulsion generally has a solids content of 60% to 70% by weight, and is present in an amount of 10% to 13% by weight based on the dry weight of aggregate present. The mixture is then formed into a slurry in water, the water content typically being in the range 10-15% by weight.

EP-A-0344382 discloses a cold bitumen emulsion mixture comprising a gap-graded aggregate, i.e. aggregate having a discontinuity in its size distribution profile, surface-treated fibres, a super-stabilised bitumen emulsion, and other additives. The mixture is metered and mixed at the point of application.

None of the above described systems is capable of achieving sustainable texture depths of greater than 1.3 mm, other than that described in EP-A-0655484, which achieve.s a surface layer having gaps between the aggregates and a negative texture.

It is clear that a surfacing method which can re-instate road profile and at the same time give a positive sustainable texture of greater than 1.3 mm would be of significant interest.

### Summary of the Invention

According to the present invention, a road surfacing method comprises mixing at a road site a surfacing material comprising:
a) particulate material comprising coarse aggregate having a particle size greater than 4.75 mm, and fine aggregate having a particle size of up to 2.35 mm;
b) a bitumen emulsion having a solids content of 50-80% by weight and which is present in an amount of 10-15% by weight of the dry weight of the particulate material;
c) fibrous material in an amount of up to 1% by weight of the dry weight of the particulate material ; and
d) a water content of less than 10% by weight of the total dry weight of contained solids,
the amount of coarse aggregate being greater than 65% by weight, preferably greater than 70% by weight, and the amount of fine aggregate being less than 35% by weight, preferably less than 30% by weight, of the particulate material, which has a maximum aggregate size of 8 mm, and applying the material, cold to a road surface in a single layer, the thickness of said layer being greater than twice the maximum aggregate size and being adjusted merely by controlling the height of a strike plate, to obtain a positive sustainable texture depth of a least 1.3 mm as measured by BS 598 Part 105 and which is substantially sustainable for at least 1 year.

When applied to a road surface, a sustainable positive texture depth of at least 1.3 mm, often greater than 1.5 mm, as measured according to BS 598, Part 105, may be achieved.

### Description of the invention

In the context of this application, by particle size we mean particle diameter, as measured using an appropriate-sized sieve, which typically will be calibrated to a British Standard.

The coarse aggregate material is typically selected from stone, such as limestone, basalt, granite, and mixtures thereof. The fine aggregate material is typically selected from sand, in particular alluvial sand, crushed limestone, crushed granite, and mixtures thereof. The particulate material as a whole may be prepared by mixing together a commercially-available "aggregate", which may be based upon one of the British Standard aggregates, or a size fraction thereof, with sand. In this case, the fine aggregate will probably comprise a mixture of sand and crushed stone or mineral from the commercially-available material.

The amount of coarse aggregate making up the particulate material ranges up to 80% by weight, and is greater than 65% by weight, and preferably greater than 70% by weight. Such increased amounts of coarse aggregate are particularly useful when the road surfacing material is to be applied as a single layer, and also when the aggregate is of an unusual shape, eg. flat, as in both instances an increased amount of coarse aggregate improves the stackability of the material.

The maximum particle size of the coarse aggregate will usually depend upon the source from which that aggregate is obtained. Typically, however, the maximum size will not exceed 8 or 10 mm.

The amount of fine aggregate included in the particulate material is down to 15 % by weight, and is less than 35% by weight, and preferably less than 30% by weight. This represents a decrease in the amount of fines compared to conventional cold slurry and microasphalt road surfacing. materials, and results in improved binder drainage, which allows a binder-rich zone to be formed at the substrate, eg. road, interface. This ensures a good bond between the new textured surface and the old substrate without resorting to a tack coating process. The reduced fines content of the surfacing material also results in good water drainage from the material when stockpiled and wet, for instance, by rain. This enables the material to maintain the desired moisture content (see below) prior to application to a substrate.

Preferably, the particulate material comprises a substantially continuous size distribution as far as the fine aggregate is concerned, and a single size material as far as the coarse aggregate is concerned. By this typically we mean that in the size distribution of the fine aggregate there are no gaps, or discontinuities, of a size greater than say 1 mm, and preferably gaps greater than 0.5 mm. To a certain extent, it may be accepted that the particulate material includes some aggregate having a size intermediate that of the coarse and fine aggregate. But, if this is the case, such «intermediate aggregates » will be accepted only, since one uses commercially-available aggregates chosen under reasonable price aspects. In this case, preferably, of this intermediate aggregate, at least 60% by weight, and more preferably 70% by weight, will have a particle size of greater than 3.35 mm.

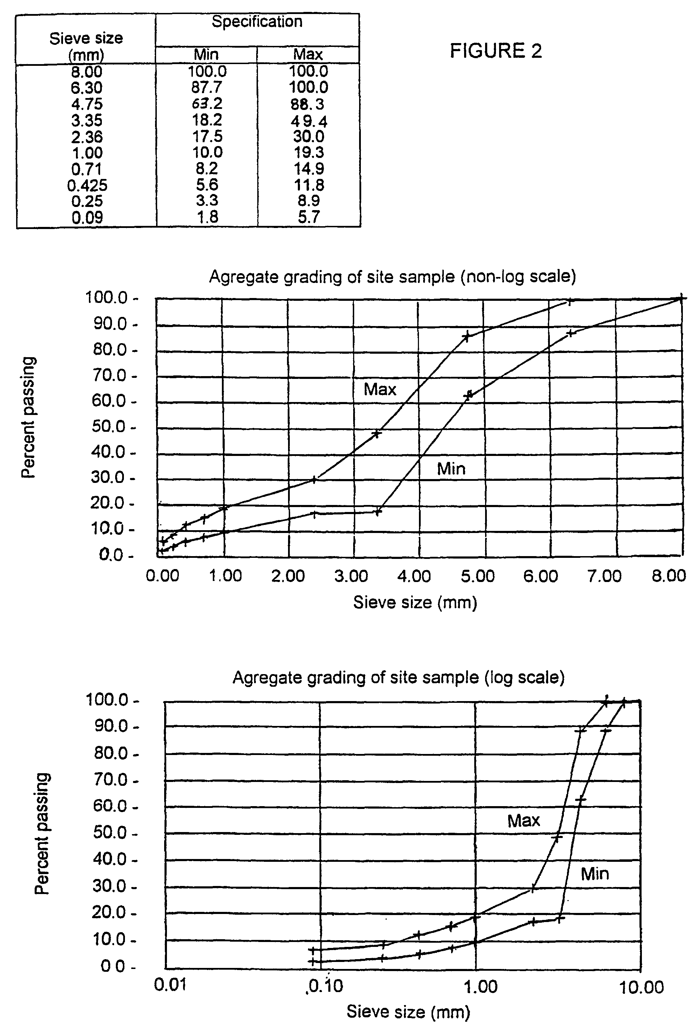

Reference is now made to Figure 2, which shows a particle size distribution of the particulate material for use in the present invention.

The bitumen emulsion for use in the present invention may be a cationic or anionic emulsion. It has a solids content of 50-80% by weight, preferably 60-70% by weight, and is present in an amount of 10-15% by weight, preferably less than 14% by weight, of the dry weight of the particulate material.

The addition of cellulose fibres to hot bitumen-based road surfacing materials is well known and documented. Such fibres are generally used to increase the surface film thickness of bitumen on the aggregate, and thereby increase product strength, reduce the effects of oxidisation, and increase product durability. Such fibres have also been found to improve the distribution of particulate material across the applied width and depth of surfacing materials. Other types of fibre have also been used, for instance glass, acrylic, polyethylene, and nylon fibres, to name a few.

The use of fibres in cold bitumen-based road surfacing materials is less common, but is described in UK 2121853, and in EP-A-0655484 and EP-A-0344382, discussed above.

The fibres for use in the present invention may be selected from any of the above-defined materials, but preferably they are cellulose fibres. The fibres may be treated either mechanically or chemically, preferably they are mechanically-separated fibres, for instance of the type described in GB 9621673.4 filed 17 October 1996, also in the name of the Applicant. Typically, the fibres are present in an amount of 0.1-0.5% by weight of the dry weight of the particulate material.

In addition to the defined particulate material, bitumen emulsion and fibrous material, the surfacing material for use in the present invention may comprise additives conventional in the field of bitumen-based surfacing materials.

Traditionally, cement such as portland cement is included in bitumen-based surfacing materials. Preferably cement is included in the materials for use in the present invention, typically in an amount of up to 5% by weight, preferably 0.5 to 3% by weight, of the dry weight of the particulate material.

Traditionally, a retarding agent, or retarder, is added as an aqueous solution when mixing the aggregate and bitumen emulsion. With the present invention's requirement for stringent water content control, clearly varying levels of an aqueous retarding agent according to the application conditions could adversely affect the resulting material uniformity. A system has therefore been developed to inject neat retarding agent directly into' the bitumen emulsion feed system via a mixing chamber which is sited just prior to the emulsion feed to the mixture. Suitable retarding agents include amines, amine oxides and quaternary ammonium salts. Experiments have shown that.the effectiveness of this direct retarding system is the same as the classical water-diluted system, but that it allows better material viscosity control.

It is well known that cold bitumen-based road surfacing materials exhibit slow curing throughout the material when applied as thick layers, for instance greater than 15 mm. To improve coalescence it is preferred to include in the surfacing material a volatile, water-immiscible solvent. This acts to reduce the viscosity of the bitumen particles, so enabling them to adhere more easily to each other and to the aggregate, and thereby significantly accelerates curing of the applied material. Suitable solvents include petroleum ether, alcohols such as butanol, and white spirit. Typically, the amount. of solvent will be up to 5% by weight of the dry particulate material. The solvent can be injected, either neat or as an emulsion, directly into the mixer for the bitumen emulsion and particulate material.

The addition of breaking agents to bitumen-based surfacing materials is well known, to increase emulsion instability and promote a faster gain in strength soon after application of the material. Examples of known breaking systems include Colas' "Emulcol" system and Nynas' "Nyset" system. The fundamentals of the latter are described in EP-A-0534039. The use of breaking agents which are described in EP-A-0655484 in the materials of the present invention have improved "thick cure" problems.

The method of the invention may be used to coat or surface a variety of substrates, but is particularly useful in road surfacing. The surfacing material is applied as a single layer in a so-called "single pass" application, which results in a surface having a more stable structure and uniform skeleton, and thereby increased strength, as compared to a surface applied in a number of layers.

Also, there is a general requirement when applying new or replacement road surfacing to do so with the minimum disruption to traffic. Therefore, to reduce site occupation time, it is beneficial to apply the material as a single layer. This means that the material need to be applied at thicknesses greater than twice the maximum aggregate size, particularly when re-surfacing a deformed road surface. Usually, road deformation occurs in wheel tracks and is manifest in the form of ruts, and it is these areas in particular that demand a stable and uniform aggregate skeleton. Moreover, the texture depth in these areas is extremely important in order to maintain acceptable skid resistance under all conditions.

When the surfacing material of the present invention is applied at a thickness of at least twice the maximum aggregate size, using a relatively fluid mix, the coarse aggregate tends to sink to the bottom of the applied layer, resulting in a loss in texture. Experiments have shown, however, that when the total water content of the surfacing material is less than 10% by weight of the total dry weight of contained solids, satisfactory results may be obtained from single layer application at thicknesses of, for instance applied thicknesses of 15 mm up to, say, 30 mm, or even higher.

The total water content of the surfacing material is limited to less than 10% by weight, and the single layer thickness is greater than twice the maximum aggregate size.

The water content of the surfacing material will typically comprise water contained in the particulate material, which is preferably less than 5% by weight of that material, and water from the bitumen emulsion. Some water may also be included in other components of the surfacing material, or added separately.

The surfacing material for use in the present invention is, typically, mixed at the site of application. It may be applied to a road surface using a conventional continuous flow mixing and laying machine. However, the surfacing material is preferably delivered to the spreader box directly from the mixer. In this case, preferably the material is delivered to the centre of the spreader box, from where it is transported to the sides of the box by an array of paddles and/or augers. In a classical spreader box, equipped with two sets of augers, the augers at the rear of the box transport the material from the centre to the edge, and those at the front re-circulate the excess material back to the centre of the box.

Preferably the spreader box is designed to minimise the application of surfacing material by hand; and to avoid excessive overlap regions. A suitable design is a powered variable-width device equipped with paddles and/or augers, such as that disclosed in EP-A-0753626.

The spreader box is also equipped with a material thickness control system, which ensures that a minimum thickness of material is applied to the road surface. This facility is most important if "single pass" work is to be undertaken. The thickness control system monitors the road profile ahead of the spreader box, preferably over the full width of the spreader box, in relation to skids running on the road surface. The system then adjusts the height of the "strike plate", or "screed blade", accordingly, thereby controlling the thickness of the applied material.

Also, changes in direction of the processing machine and spreader box combination, for instance caused by curves in the road being re-surfaced require that the path of the skids be accurately controlled to remain substantially tangential to the resulting curved path, to avoid damage to recently applied material. This system of movements is described in WO-A-9400640.

A system suitable for the introduction of the fibrous material is disclosed in UK-A-2121853.

If additional components are to be included in the surfacing material for use in the present invention, as detailed above, then the processing machine will require suitable modification to introduce and then mix such components into the surfacing material.

If a retarder is to be included in the surfacing material, preferably this will be introduced in an undiluted form, so as not to alter the overall water content of the surfacing material. If a breaking agent is to be included, the processing machine should be equipped with pumping and metering means to enable that to be introduced at a convenient stage.

Optionally, prior to application of the surfacing material, the road surface may be provided with a tack coat, to improve adhesion between the surfacing material and the road surface. Any conventional tack coat material may be used, including those usually employed with hot emulsion mixes. Suitable examples include emulsions to specifications K1-40, K1-60, K1-70 or polymer-modified emulsions of suitable breaking characteristics.

Reference is now made to the following Example, which illustrates the beneficial results achieved by the present invention.

### Example

A sample of a surfacing material was laid in accordance with the method of the present invention as a single layer 18 mm thick on a plaster base, and subjected to the test method described in BS 598:Part XYZ 1994, Draft.

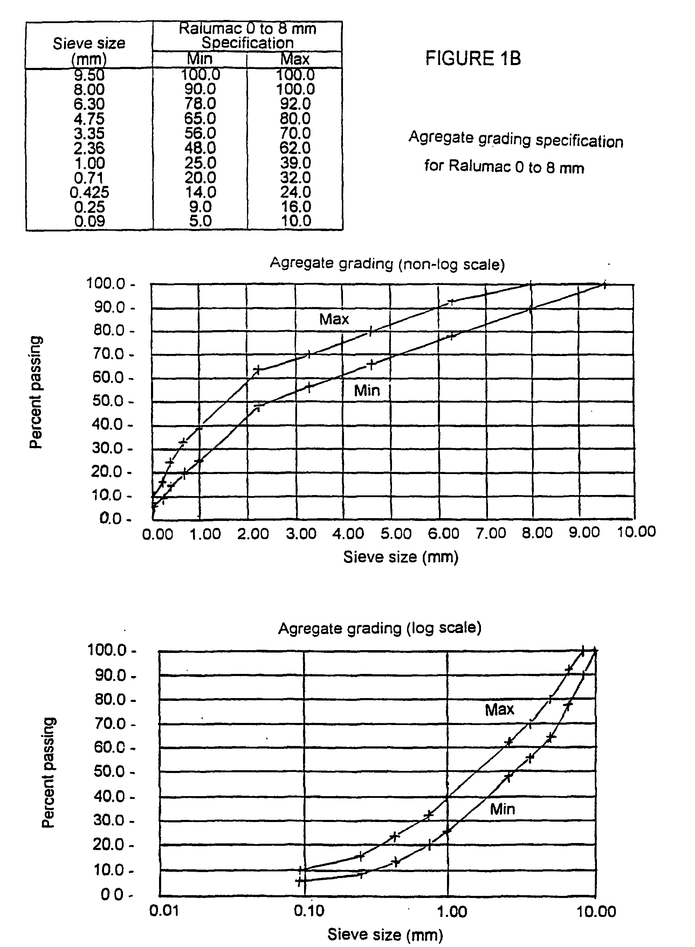

The surfacing material contained 10 kg of a particulate material having the size distribution profile shown in Figure 2, 1 kg of a bitumen emulsion having a solids content of 65% by weight, 0.03 kg of mechanically-separated, uncoated cellulose fibres, 0.2 kg portland cement, 0.4 kg water and 2 g Peral 417 (as retarder), diluted with part of the water.

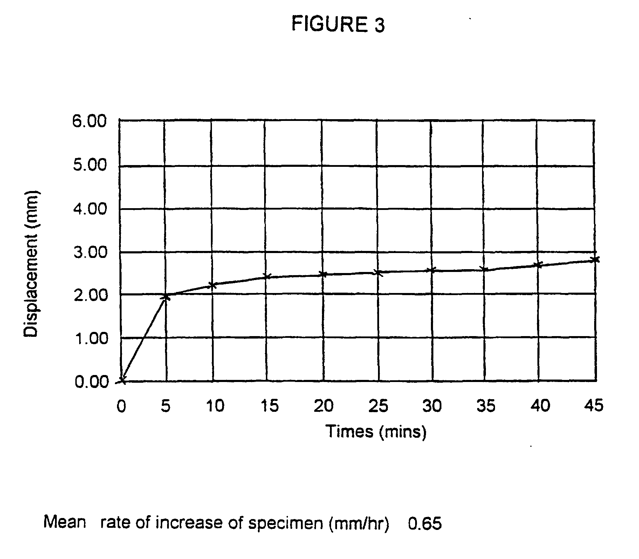

The results of a wheel tracking test obtained are presented graphically in Figure 3. The rate of increase of compressibility was 0.65 mm hr⁻¹, and is, therefore, superior to the British Standard compressibility for a hot mix road material which is of the order of 1.24 mm hr⁻¹. This reduction in compressibility indicates that the surfacing material according to the present invention may be capable of substaining a desired texture depth of, or in excess of, 1.3 mm and improving the rutting resistance of the new textured road surface.

## Claims

1. A method of road surfacing comprising mixing at a road site a surfacing material comprising:
a) particulate material comprising coarse aggregate having a particle size greater than 4,75 mm and fine aggregate having a particle size of up to 2.35 mm;
b) a bitumen emulsion having a solid content of 50-80% by weight and which is present in an amount of 10-15% by weight of the dry weight of the particulate material;
c) fibrous material in an amount of up to 1% by weight of the dry weight of the particulate material; and
d) a water content of less than 10% by weight of the total dry weight of contained solids,
the amount of coarse aggregate being greater than 65% by weight, preferably greater than 70% by weight, and the amount of fine aggregate being less than 35% by weight, preferably less than 30% by weight, of the particulate material, which has a maximum aggregate size of 8mm, and applying the material, cold to a road surface in a single layer, the thickness of said layer being greater than twice the maximun aggregate size and being adjusted merely by controlling the height of a strike plate, to obtain a positive sustainable texture with a texture depth of at least 1.3 mm as measured by BS 598 Part 105 and which is substantially sustainable for at least 1 year.

2. The method according to claim 1, wherein the material is applied to road surface in a single layer, typically having a thickness of at least 10mm.

3. The methof according to claim 1 or 2, wherein the material is prepared by mixing together its components at a site at which it is to be applied.

4. The method according to any claims 1 to 3, wherein during application of the material to the road surface a volatile, water-immiscible solvent, optionnaly in emulsified form, is injected in to the material.

5. The method of according to anyone of claims of claims 1 to 4 wherein the layer has a thickness ranging form 15 mm to 30 mm.

6. A road obtainable by a method according to any of claims 1 to 5.

## Patentansprüche

1. Verfahren zum Belegen von Straßen, umfassend das Mischen am Lageort einer Straße eines Belagmaterials, umfassend:
a) Partikelmaterial, umfassend grobes Aggregat, das eine Partikelgröße von über 4,75 mm aufweist, und feines Aggregat, das eine Partikelgröße von bis zu 2,35 mm aufweist;
b) eine Bitumenemulsion, die einen Feststoffgehalt von 50 - 80 Gew.-% aufweist und in einer Menge von 10 - 15 Gew.-% des Trockengewichts des Partikelmaterials vorhanden ist;
c) Fasermaterial in einer Menge von bis zu 1 Gew.-% des Trockengewichts des Partikelmaterials; und
d) einen Wassergehalt von weniger als 10 Gew.-% des Gesamttrockengewichts enthaltener Feststoffe,
wobei die Menge des groben Aggregats mehr als 65 Gew.-%, vorzugsweise mehr als 70 Gew.-%, und die Menge des feinen Aggregats weniger als 35 Gew.-%, vorzugsweise weniger als 30 Gew.-%, des Partikelmaterials beträgt, das eine maximale Aggregatgröße von 8 mm aufweist, und Auftragen des Materials kalt auf eine Straßenfläche in einer einzigen Schicht, wobei die Dicke der Schicht größer als die zweifache maximale Aggregatgröße ist und lediglich durch Steuerung der Höhe einer Abgleichplatte reguliert wird, um eine sicher tragfähige Textur mit einer Texturtiefe von zumindest 1,3 mm gemessen nach BS 598 Teil 105 zu erhalten, die im wesentlichen für zumindest 1 Jahr tragfähig ist.

2. Verfahren nach Anspruch 1, wobei das Material auf die Straßenfläche in einer einzelnen Schicht aufgetragen wird, die typischerweise eine Dicke von zumindest 10 mm aufweist.

3. Verfahren nach einem der Ansprüche 1 oder 2, wobei das Material durch Zusammenmischen seiner Bestandteile an einem Standort hergestellt wird, an dem es aufgetragen wird.

4. Verfahren nach einem der Ansprüche 1 bis 3, wobei beim Auftragen des Materials auf die Straßenfläche ein flüchtiges, nicht mit Wasser mischbares Lösungsmittel, wahlweise in emulgierter Form, in das Material eingespritzt wird.

5. Verfahren nach einem der Ansprüche 1 bis 4, wobei die Schicht eine Dicke aufweist, die von 15 mm bis 30 mm reicht.

6. Straße, die durch ein Verfahren nach einem der Ansprüche 1 bis 5 erzielbar ist.

## Revendications

1. Un procédé de revêtement de route comprenant le mélange sur un site routier d'un matériau de revêtement comprenant :
a) un matériau particulaire comprenant un agrégat grossier ayant une dimension de particule supérieure à 4,75 mm et un agrégat fin ayant une dimension de particule allant jusqu'à 2,35 mm ;
b) une émulsion de bitume ayant une teneur en solides de 50 à 80 % en poids et qui est présente à raison de 10 à 15 % en poids du poids sec du matériau particulaire ;
c) un matériau fibreux selon une quantité allant jusqu'à 1 % en poids du poids sec du matériau particulaire ; et
d) une teneur en eau inférieure à 10 % en poids du poids total sec des solides contenus,
la quantité d'agrégat grossier étant supérieure à 65 % en poids, de préférence supérieure à 70 % en poids et la quantité d'agrégat fin étant inférieure à 35 % en poids, de préférence inférieure à 30 % en poids du matériau particulaire qui a une dimension d'agrégat maximum de 8 mm, et l'application du matériau froid à une surface de route selon une seule couche, l'épaisseur de ladite couche étant supérieure à deux fois la dimension d'agrégat maximum et étant ajustée simplement en réglant la hauteur d'une plaque d'application pour obtenir une texture durable positive avec une profondeur de texture d'au moins 1,3 mm, comme mesuré par la norme BS 598 Part 105 et qui est essentiellement durable pendant au moins 1 année.

2. Le procédé selon la revendication 1, dans lequel le matériau est appliqué à la surface de la route selon une seule couche ayant typiquement une épaisseur d'au moins 10 mm.

3. Le procédé selon la revendication 1 ou 2, dans lequel le matériau est préparé en mélangeant conjointement ses composants en un site dans lequel il doit être appliqué.

4. Le procédé selon l'une quelconque des revendications 1 à 3, dans lequel durant l'application du matériau à la surface de la route, un solvant non miscible à l'eau, volatil, éventuellement sous une forme émulsifiée, est injecté dans le matériau.

5. Le procédé selon l'une quelconque des revendications 1 à 4, dans lequel la couche a une épaisseur se situant dans la gamme de 15 mm à 30 mm.

6. Une route apte à être obtenue par un procédé selon l'une quelconque des revendications 1 à 5.
